# EUROPEAN PATENT APPLICATION

(11) **EP 4 137 305 A1**
(43) Date of publication of application: **22.02.2023**
(21) Application number: 22190710.8
(22) Date of filing: 17.08.2022
(51) Int. Cl.: B32B 1/02, B32B 3/26, B32B 3/28, B32B 23/06, B32B 23/08, B32B 27/08, B32B 27/10, B32B 27/30, B32B 29/00

(54) **LAMINATED PACKAGING MATERIAL, AND A METHOD FOR MANUFACTURING**

(30) Priority: 19.08.2021 EP 21192222
(71) Applicant: Tetra Laval Holdings & Finance S.A., 1009 Pully (CH)
(72) Inventor: TOFT, Nils, 224 72 Lund (SE); BERLIN, Mikael, 224 56 Lund (SE); BENKÖ, Gabor, 22648 Lund (SE)
(74) Representative: Tetra Pak - Patent Attorneys SE

(57) **Abstract**

A laminated packaging material (16) for packaging of liquid food products (12) and a respective manufacturing method are provided. The laminated packaging material (16) comprises a bulk layer (20) of paper or paperboard or other cellulose-based material, a first outermost liquid tight layer (22), arranged on the outside of the bulk layer (20) to constitute the outside of a packaging container (10) formed from the packaging material (16), a second innermost liquid tight layer (24) arranged on the inside of the bulk layer (20) to be in direct contact with the filled food product (12), and a barrier film or sheet (26) being laminated between the bulk layer (20) and the second, innermost liquid tight layer (24), wherein the barrier film or sheet (26) is a non-metal barrier film or sheet, or a barrier film or sheet having a metal content of 5 mass percent or less, wherein the bulk layer (20) is provided with at least one through-going hole (28) and the first liquid tight layer (22), the second liquid tight layer (24), and the barrier film or sheet (26) are forming a laminated membrane (30) at the area of the through-going hole (28). The barrier film or sheet (26) of the membrane (30) is provided with at least one slit (32).

## Description

### Technical Field

The invention relates to a laminated packaging material for packaging of liquid food products, a method for manufacturing such laminated packaging material, as well as to a packaging container comprising the laminated packaging material.

### Background Art

Packaging containers of the single use disposable type for liquid foods are often produced from a packaging laminate based on paperboard or carton. One such commonly occurring packaging container is marketed under the trademark Tetra Brik Aseptic@ and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous highspeed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

The layer of an aluminium foil in the packaging laminate has been used for many years to provide the desired gas barrier properties and the conventional aluminium-foil based packaging laminate for liquid food aseptic packaging is still the most cost-efficient packaging material, at its level of performance, available on the market today.

However, there is currently a trend growing towards developing laminated packaging materials having no aluminium-foil in the laminated structure, seeking to improve the environmental profile of the resulting material. It is then of course desirable to also lower the costs for manufacturing of the laminated packaging material and keeping the necessary properties for aseptic long-term storage of the packaging containers produced from the laminated packaging material.

Any material to compete with the aluminium foil must be cost-efficient regarding raw materials, have at least comparable food preserving properties and have a comparably low complexity during converting into a finished packaging laminate.

Among the efforts of developing non-aluminium-foil materials for liquid food carton packaging, there is also a general incentive towards developing premanufactured films or sheets having high and multiple barrier functionalities, i.e. not only oxygen and gas barrier but also water vapour, chemical- or aroma-substance barrier properties, which may replace the aluminium-foil barrier material, of the conventional laminated packaging material, and adapt it to the conventional Al-foil process for lamination and manufacturing.

In order to accommodate to the industry needs the present applicant has suggested a range of alternatives for laminated packaging materials without the aluminium foil. For example, in EP3517291 it is suggested to use a barrier film comprising a polyester selected from the group consisting of polyethylene-2,5-furandicarboxylate (PEF) and polytrimethylene furandicarboxylate (PTF), a blend and a co-polymer thereof, coated with a vapour deposited barrier coating comprising a metal or metal oxide. In US11046060 it is disclosed a barrier film comprising a PECVD coating of diamond-like carbon.

While the suggested barrier films and the resulting laminated packaging materials provide promising performance in terms of being environmental friendly, cost efficient, and providing the desired integrity these non-aluminium barrier materials typically exhibit significant differences in penetration capability. Penetration of the barrier film is normally required for laminated packaging materials being provided with straw holes or other opening structures through which the consumer will access the content of the packaging container after penetration. Such holes are provided by punching a hole in the bulk or core layer prior to lamination, and then cover the hole on the inside and outside by the additional lamination layers, including the barrier material.

For consumer satisfaction the penetration force should be as low as possible, however in order to prevent unintentional penetration some resistance of the opening structure is required. Consumer surveys have revealed a desired penetration force of around 15 N or less. A penetration force of around 10 to 12 N has proven to be satisfactory in terms of packaging container integrity and handling. However, laminated packaging materials using alternatives to aluminium foil for the barrier material all require a significantly higher penetration force, such as in the range of 25 N.

There is thus a need for an improved laminated packaging material which does not require a barrier consisting of an aluminium foil but at the same time provides a reduced penetration force for opening structures provided in the laminated packaging material.

### Summary

It is an object of the invention to at least partly overcome one or more of the above-identified limitations of the prior art. In particular, it is an object to provide a laminated packaging material for packaging of liquid food products that securely encloses the liquid food product, reduces the penetration force required to use a straw with the packaging material, and reduces the amount of metal material comprised by the packaging material.

To solve these objects a laminated packaging material for packaging of liquid food products is provided in a first aspect of the invention. The laminated packaging material comprises a laminated packaging material for packaging of liquid food products, comprising a bulk layer of paper or paperboard or other cellulose-based material, a first outermost liquid tight layer, arranged on the outside of the bulk layer to constitute the outside of a packaging container formed from the packaging material, a second innermost liquid tight layer arranged on the inside of the bulk layer to be in direct contact with the filled food product, and a barrier film or sheet being laminated between the bulk layer and the second, innermost liquid tight layer, wherein the bulk layer is provided with at least one through-going hole and the first liquid tight layer, the second liquid tight layer, and the barrier film or sheet are forming a laminated membrane at the area of the through going hole.

The barrier film or sheet is an at least proportionately non-metal barrier film or sheet, i.e. the barrier film or sheet is a non-metal barrier film or sheet, or a barrier film or sheet having a metal content of 5 mass percent or less.

According to the laminated packaging material of the invention, the barrier film or sheet of the membrane is provided with at least one slit.

The slit being provided in the barrier film or sheet of the membrane is advantageous in that the required penetration force, if for example a straw is to be inserted in the area of the slit, is significantly reduced, while protection of the food product that can be packaged by the laminated packaging material of the invention is maintained. The penetration force is in particular decreased to a level very well below 25 N and reaches a level below 10 N in many embodiments of the invention. At the same time, an oxygen transmission rate (OTR) for the part of the package is maintained at a surprisingly low level, not exceeding 0.006 cm³/part (24h, 0,2 atm at 23 degrees C and 50 % relative humidity) and going down to 0.003 cm³/part in many embodiments of the invention. By comprising the at least proportionately non-metal barrier film or sheet, which means in other words that the barrier film or sheet at least partially comprises a non-metal material, the amount of metal in the laminated packaging material is significantly reduced or eliminated. This improves the environmental profile of the laminated packaging material.

The bulk layer is preferably provided with at a plurality of through-going holes. The first outermost and/or second innermost liquid tight layers preferably may be heat sealable. Further preferred, the first outermost and/or second innermost liquid tight layers may comprise a thermoplastic material. Preferably, the first outermost and/or second innermost liquid tight layers are heat sealable thermoplastic layers.

The barrier film or sheet may comprise any barrier material that is suitable to maintain a food safe environment for the packaged liquid food product. This covers materials with inherent gas barrier properties, in particular materials forming an oxygen transmission barrier. Such materials for example can be found among films of polymers, such as films of ethylene vinyl alcohol, EVOH, or polyamides. Alternatively, a barrier film may comprise a polyolefin-based substrate with a vacuum deposited barrier coating. Vacuum deposited or vapour deposited coatings may be coatings of metals, metal oxides, inorganic oxides, other inorganic compounds or carbon-based coatings, such as amorphous diamond-like carbon, DLC, coatings. However, it shall once again be noted that, if the barrier film or sheet comprises a metal material, it partially comprises at least one more non-metal material. It can also consist of a non-metal material completely. Some preferred materials will be described further below.

The barrier film or sheet may be a composite material, for example comprising a major amount of non-metal material and a small amount of a metal material. The metal material may in some embodiments provide the advantage of preventing the transmission of light, in order to further protect the product enclosed by the packaging material from the outer environment. Preferably, the amount of metal material is not more than 5 %, further preferred not more than 4 %, further preferred not more than 3 %, even further preferred not more than 2 % and mostly preferred not more than 1 % of the total amount of the composite material. The amount of metal material may refer to a mass or volume amount of the total amount of the composite material, which means it is expressed in mass percent or volume percent, respectively, of the total amount. Preferably, it refers to a mass amount. All intermediate values from the amount of 5 % down to 0 % are also disclosed herein, only limited by the accuracy achievable by known manufacturing processes.

For example, the non-metal material may comprise a plastic, paper or cellulose-based material. For example, the metal material may comprise Aluminum. Other preferred materials will be described further below. The non-metal material may form a substrate which carries a barrier material.

In an embodiment of the laminated packaging material of the invention, the at least one slit extends fully through the barrier film or sheet. This significantly reduces the required penetration force to pierce the membrane, for example with a straw.

In an embodiment of the laminated packaging material of the invention, the at least one slit extends partly through the barrier film or sheet.

This is particularly beneficial to achieve a lower OTR and a sufficiently low penetration force at the same time.

In an embodiment of the laminated packaging material of the invention, the barrier film or sheet comprises a substrate layer being coated with a barrier material. Such a barrier film or sheet may be one embodiment of the above described composite material.

In an embodiment of the laminated packaging material of the invention, the substrate layer is made of plastic or paper or a cellulose-based material.

For example, the substrate layer may be metallized, preferably with Aluminum. The metal on the substrate layer, for example Aluminum, may have a thickness of 60 nm, for example. The substrate layer may have a thickness of typically 12 µm or more, such as from 12 to 50µm, depending on the material, the desired application and machine parameters. In this merely exemplary combination, the amount of metal would typically range considerably lower than 1 vol% or thickness-% of the barrier film or sheet.

Generally, the barrier film or sheet and, if applicable the coating included therein, may comprise a thin material coating of a vapor deposition coating or a dispersion coating material or a combination of such coatings. The substrate layer may comprise a barrier material, as well, which may be a skin layer or coating of EVOH or a polyamide polymer.

Gas barrier materials or coatings applied by means of coating of aqueous dispersion or solution compositions may comprise polymers which have inherent gas barrier properties, and which are food safe and environmentally sustainable, both regarding recyclability and their application in industrial coating and lamination processes. Such polymers are thus water dispersible and/or dissolvable in water and may be applied by means of an aqueous dispersion coating process or a liquid film coating process. Non-aqueous or only partly aqueous coating compositions, such as those based on alcohols or mixtures of alcohol and water, are also suitable in terms of the invention disclosed herein.

The barrier dispersion coating may comprise a polymer selected from the group consisting of vinyl alcohol polymers and copolymers, such as from the group consisting of polyvinyl alcohol (PVOH) and ethylene vinyl alcohol (EVOH), starch, starch derivatives, nanofibrillar cellulose/ microfibrillar cellulose (NFC/ MFC), nanocrystalline cellulose (NCC) and of blends of two or more thereof.

The barrier dispersion coating may be applied by means of dispersion or solution coating at an amount of from 0.2 to 5 g/m², such as from 0.5 to 4 g/m², such as from 0.5 to 3.5 g/m² or such as from 1 to 3 g/m² referring to the dry weight of the barrier material.

Processes suitable for coating of low-dry content polymer dispersion or solution compositions are broadly any suitable wet coating methods, such as gravure roll coating, air spraying, airless spraying, reverse roll coating, wire bar coating, lip coating, air knife coating, curtain flow coating, spray coating, dip coating, blade coating and brush coating methods.

The barrier dispersion coating compositions may be based on the two most common types of polymers and copolymers suitable for dispersion coating, based on vinyl alcohol monomers, i.e. polyvinyl alcohol (PVOH) and ethylene vinyl alcohol (EVOH).

The gas barrier polymer may preferably be PVOH, because it provides good film formation properties, gas barrier properties, cost efficiency, food compatibility, as well as odor barrier properties.

A PVOH-based gas barrier composition performs best when the PVOH has a degree of saponification of at least 98 %, preferably at least 99 %, although also PVOH with lower degrees of saponification will provide oxygen barrier properties.

On the other hand, EVOH may be advantageous by providing some moisture resistance to the barrier material, since the copolymer comprises ethylene monomer units. The amount of ethylene monomer units depends on the choice of EVOH grade, but its presence will be at the expense of some oxygen barrier property, in comparison to pure PVOH. Conventional EVOH polymers, are normally intended for extrusion and are not possible to disperse or dissolve in an aqueous medium in order to produce a thin liquid film coated barrier film of 3,5 g/m2 or below. Such an EVOH should comprise a rather high amount of vinyl alcohol monomer units to be water-dispersible and the properties should be as close to those of liquid film coating grades of PVOH as possible. An extruded EVOH layer may be incorporated into a polymeric substrate film, preferably as a skin layer onto a polyolefin base film.

A barrier dispersion coating composition may further comprise from about 1 to about 20 weight % of an inorganic laminar compound based on dry coating weight, such as exfoliated nanoclay particles, such as bentonite. Thus, the barrier layer may include from about 99 to about 80 weight % of the polymer based on the dry coating weight.

The barrier dispersion coating may thus be applied at a total amount of from 0.2 to 4 g/m², more preferably from 0.5 to 4 g/m², such as from 0.5 to 3.5 g/m², such as from 1 to 3 g/m², dry weight. Below 0.2 g/m², there will be no gas barrier properties achieved at all, while above 3.5 g/m², the coating will bring less cost-efficiency to the packaging laminate, due to high cost of barrier polymers in general and due to high energy cost for evaporating off the liquid. A recognizable level of oxygen barrier is achieved by PVOH at 0.5 g/m², and above, and a good balance between barrier properties and costs is normally achieved between 0.5 and 3 g/m².

The barrier dispersion coating may be applied in two consecutive steps with intermediate drying, as two part-layers. When applied as two part-layers, each layer is suitably applied in amounts from 0.2 to 2 g/m², preferably from 0.5 to 1.5 g/m², and allows a higher quality total layer from a lower amount of liquid gas barrier composition. More preferably, the two part-layers are applied at an amount of from 0.5 to 1.5 g/m² each.

The substrate may also have, on the surface of its first side, a vapor deposition coating of a gas barrier material selected from metals, metal oxides, inorganic oxides and amorphous diamond-like carbon coatings. The vapor deposition coating may be applied by means of physical vapor deposition (PVD) or chemical vapor deposition (CVD), for example by plasma enhanced chemical vapor deposition (PECVD). It may more specifically be selected from the group consisting of an Aluminum metallization coating and Aluminum oxide, AlOx, applied by a PVD coating process. Preferably it is an Aluminum metallization coating. A PVD process is used for for metal deposition, such as of aluminium or aluminium oxide, AlOx, while amorphous carbon and diamond like carbon depositions are provided by CVD or PECVD processes.

A substrate of paper or a cellulose-based material sheet may have on a first, surface a first dispersion coating of a gas barrier material formed by coating and subsequent drying of a dispersion or solution of an aqueous gas barrier composition, and further a vapor deposition coating of a gas barrier material selected from metals, metal oxides, inorganic oxides and amorphous diamond-like carbon, applied onto the first barrier dispersion coating.

A barrier-coated cellulose-based substrate may also be coated with a gas barrier material by means of vapor deposition coating onto its top-side surface to a thickness of from 2 to 80 nm, such as from 2 to 50 nm, such as from 2 to 45 nm.

The vapor deposited barrier coating to finally be coated onto a top-side surface of a substrate, may be applied by means of physical vapor deposition (PVD) or chemical vapor deposition (CVD), for example by plasma enhanced chemical vapor deposition (PECVD). The latter processes are particularly suitable for polymer film substrates, however.

Generally, a thickness below 5 nm the barrier properties may be too low to be useful and above 200 nm, such as above 100 nm, such as above 50 nm, depending on the type of vapor deposition coating, the barrier coating may be less flexible and, thus, more prone to cracking when applied onto a flexible substrate and would also cost more.

Other examples of vapor deposition coatings are Aluminum oxide (AlOx, Al2O3) and Silicon oxide (SiOx) coatings. Generally, PVD-coatings of such oxides are more brittle and less suitable for incorporation into packaging materials by lamination, while metallized layers as an exception do have suitable mechanical properties for lamination material despite being made by PVD.

Normally, an Aluminum metallized layer inherently has a thin surface portion consisting of an Aluminum oxide due to the nature of the metallization coating process used.

The Aluminum metallized layer may be applied to an optical density (OD) of from 1.8 to 3.0 or even 3.5, such as from 1.8 to 3.0, such as from 1.8 to 2.5, preferably from 1.9 to 2.2. At an optical density lower than 1.8, the barrier properties of the metallized film may be too low. At above 3.5, such as above 3.0, such as above 2.5, on the other hand, the metallization layer may become brittle, and the thermostability during the metallization process will be low due to higher heat load when metallizing the substrate film during a longer time. The coating quality and adhesion may then be negatively affected.

Other coatings may be applied by means of a plasma enhanced chemical vapor deposition method (PECVD), wherein a vapor of a compound is deposited onto the substrate under more or less oxidizing circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

In an embodiment of the laminated packaging material of the invention, the slit is centrally arranged at the membrane. This design contributes to a low required penetration force, because the material can be easily displaced to the sides upon penetration, with for example a straw. The position of the slit refers to a relative position of a center of area covered by the slit and a center of area of the respective through-going hole of the bulk layer. In case of a circle or semi-circle, the center of area is herein defined as an area enclosed by said circle or partwise enclosed by said semi-circle, respectively.

The slit is preferably provided by an action directed to form a material separation rather than removing material. Suitable techniques for providing a slit may e.g. be by means of a laser, cutting using a knife or sharp blade, or applying a spark treatment.

The slit may have different shapes depending on the desired penetration force, and depending on the associated opening device (e.g. paper straw, plastic straw, etc.). Generally, the design of the slit is determined by a trade-off between OTR and penetration force. A minimum OTR would typically require a minimum slit, while a minimum penetration force would require a rather extensive slit. However, a minimum penetration force is typically not desired as a certain amount of penetration force will effectively prevent unintentional opening.

The penetration force is typically exhibiting a sequential dual peak behavior. When penetrating the packaging material with a straw, a first penetration force is required to penetrate the first layer(s) of the packaging material. A second penetration force is then required to push the straw through the slit, causing a deflection of the packaging material around the straw. The popular use of paper-made straws provides additional challenges compared to plastic straws. On one hand the paper straws are not as sharp as plastic straws, thereby requiring a higher first penetration force in order to push through the initial layer(s) of the packaging material. On the other hand the paper-made straws often have a larger diameter as compared to plastic straws, and they may be less prone to compress thereby requiring also a higher second penetration force.

The inventors have realized that in a preferred embodiment, the slit is very narrow in one direction, while extended in another longitudinal, perpendicular direction. The "narrow" dimension is e.g. achieved by a sharp cutting knife, or by a focused laser beam. The longitudinal extension of the slit allows the packaging material, in particular the barrier film or sheet, to separate sufficiently easy in order to allow the straw to penetrate the packaging material.

The slit may extend in the machine direction. This allows the slit tool to be stationary at least in the longitudinal direction, as the motion of the packaging material will cause the desired extension of the slit.

In an embodiment of the laminated packaging material of the invention, the barrier film or sheet is provided with at least two intersecting slits. This significantly reduces the required penetration force. Preferably, the slit is in the form of a cross. In experiments, the penetration force required could be reduced down to about 5 N in case of the cross, whereas the OTR was kept down at 0.006 cm³/part at the same time.

Further, each slit of the cross may be angled relative a longitudinal extension, or machine direction, of the laminated packaging material. Regarding the longitudinal extension it shall be understood, that the laminated packaging material is normally manufactured in a continuous process that has a material feed direction, also referred to as a manufacturing direction or machine direction. The longitudinal extension of the laminated packaging material is herein defined as parallel to the machine direction. However, it should be noted that the longitudinal extension of the laminated packaging material may be oriented 90° in relation to the longitudinal extension of the final packaging container; in some cases the area of the web of laminated packaging material intended to form a single packaging container is oriented such that the intended longitudinal extension of the final packaging container is aligned with the cross-machine direction, i.e. perpendicular to the machine direction.

When producing the cross, a respective cutting tool needs to depart from the machine direction as it moves relative the work piece. Thus, the faster the laminated packaging material is moved in the production process, the higher are control requirements to adapt the movement of the cutting tool relative the machine direction to create for example a slit extending transverse the machine direction. This makes it more difficult to manufacture a symmetric cross comprising for example one slit transverse the manufacturing direction (which means at an angle of 90 degrees) and one intersecting slit parallel the machine direction (which means at an angle of 0 degrees). However, if both slits are angled relative the machine direction, for example each at 45 degrees, the control requirements for the movement of the cutting tool relative the machine direction to manufacture these slits can in some embodiments be reduced, depending on the cutting tool. At the same time, a symmetric cross can be manufactured, for example with both slits intersecting perpendicularly, which means in an X-type of form.

In an embodiment of the laminated packaging material of the invention, the slit is in the form of a semi-circle. The slit may comprise the shape of a quarter-circle, a third of a circle or half-circle for example, as well as for example two thirds of a circle or a three-quarter circle. The part-circle's diameter preferably corresponds to diameter of a known straw and may for example comprise a diameter of 6 mm. The semi-circle, which in other words means a single-interrupted or multiple-interrupted circle, preferably comprises the shape of a half-circle. In experiments, the penetration force required could be reduced down to about 5 N in case of the half-circle, whereas the OTR was kept down at 0.006 cm³/part at the same time.

In an embodiment of the laminated packaging material of the invention, the slit is in the form of at least one straight line or dot perforation This can be done by creating a single straight line or single dot perforation, which is the most preferred solution from a manufacturing point of view, at least if done by laser cutting. The slit or dot perforation should then be done in the machine direction of the material. However, both alternatives can be used to create a perforation type of slit, as well. In case of experiments with a perforation type of slit, which means in one embodiment a slit comprising a plurality of relatively short and longitudinally aligned straight lines, the penetration force required could be reduced down to about 8 N, whereas the OTR was kept down at 0.003 cm³/part at the same time.

It shall be noted, that the other shapes described above could also be formed by a sequence of dot perforations and/or lines. For example, a circle can be formed by a sequence of dot perforations, curved lines or straight lines.

Another aspect of the invention refers to a method of manufacturing a laminated packaging material for packaging of liquid food products. The method may in particular correspond to the inventive laminated packaging material described herein and therefore implies all method related aspects disclosed with regard to that laminated packaging material, as well as the other way around.

The method of the invention comprises:
- providing a bulk layer of paper or paperboard or other cellulose-based material with at least one through-going hole,
- laminating an at least proportionately non-metal barrier film or sheet to said bulk layer such that the barrier film or sheet forms a membrane part covering the at least one through-going hole of the bulk layer,
- providing the barrier film or sheet of the membrane part with at least one slit, and
- laminating a first outermost liquid tight layer on the outside of the bulk layer to constitute the outside of a packaging container formed from the packaging material, and
- laminating a second innermost liquid tight layer on the inside of the barrier film or sheet to be in direct contact with the filled food product, such that the first liquid tight layer, the second liquid layer, and the barrier film or sheet together form a laminated membrane at the area of the at least one through-going hole.

An at least proportionately non-metal barrier film or sheet should in this context be interpreted as a non-metal barrier film or sheet, or a barrier film or sheet having a metal content of 5 mass percent or less.

It is preferred to laminate the barrier film or sheet to the bulk layer prior to laminating the first tight layer and second liquid tight layer on the inside and outside of the bulk layer. It is particularly preferred, to laminate the first tight layer and second liquid tight layer on the inside and outside of the bulk layer after the slit has been manufactured. This is beneficial to maintenance of the integrity of the barrier film or sheet, especially in case of non-metal materials. The term of laminating also covers hot melting or spraying techniques or the like.

Preferably, the laminated packaging material is manufactured in a continuous process or in a manner that a web is produced, in other words. Said web can then be cut into pieces to manufacture various packaging containers from said pieces. In that case, it is preferred to provide the bulk layer with a plurality of through-going holes, preferably one through-going hole for each packaging container to be made.

In an embodiment of the method of the invention, the step of laminating the barrier film or sheet to the bulk layer is performed by extrusion lamination or wet lamination.

Preferably, the step of laminating the barrier film or sheet to the bulk layer is performed before the slit is created in the inventive method. Thus, the slit can be precisely placed inside the through-going hole and a material added in the extrusion lamination or wet lamination process, such as a glue, is not passing through the barrier film or sheet or the bulk layer. This effectively prevents a pollution of the respective manufacturing equipment, such as nip rollers used for lamination.

In an embodiment of the method of the invention, the step of providing the barrier film or sheet of the membrane part with at least one slit is performed by laser cutting, and/or by mechanical cutting. Other possible tools and techniques for providing the slit include spark or electrical discharge cutting and/or air-jet cutting.

Both variants are particularly efficient, if a single slit is provided in the manufacturing direction. Laser cutting is particularly suitable to efficiently create one or more slits of a flexible geometry. Thanks to the flexibility, laser cutting is also suitable for fast reconfiguration when switching from one format of packages to another, during production, whereas mechanical cutting would require switching also the entire mechanical cutting tool. Laser cutting also allows for the slit being precisely placed inside the through-going hole, which may for example comprise a diameter of only 6 mm. It shall be noted that choosing the geometry of the slit should also take into account the possibility of evacuating any air that might be left entrapped by the bulk layer and barrier film or sheet.

Mechanical cutting on the other hand, for example by a knife or perforation knife, can be done at low technical effort.

In an embodiment of the method of the invention, the at least one slit is extending fully or partly through the barrier film or sheet. For example, the slit can be provided as only extending through the barrier film or sheet to an extent of 50% or more, thereby providing a local weakening without penetrating the barrier film or sheet completely. This way, the openability, respectively the reduction of a required penetration force, can be flexibly adapted with regards to different materials chosen.

In an embodiment of the method of the invention, the at least one slit extends in the longitudinal and/or transversal direction of the laminated packaging material.

In particular if the at least one slit extends at least to some extent in the longitudinal direction, the manufacturing effort is significantly decreased, as stated above with regard to the laminated packaging material of the invention. This is particularly advantageous, if the manufacturing process is a continuous process.

In case also the outermost liquid tight layer would be cut through by the slit or perforation of the main layer, the latter may be coated locally after the formation of a packaging container in the filling machine, such as by an aqueous dispersion of a barrier polymer, such as PVOH, EVOH or PA.

Another aspect of the invention refers to a packaging container, comprising the laminated packaging material of the invention and/or comprising a laminated packaging material manufactured in the method of the invention.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 shows an embodiment of a packaging container for liquid food products;
Fig. 2 shows an embodiment of a laminated packaging material for packaging of liquid food products in a cross-sectional view and makes reference to a respective manufacturing method; and
Fig. 3 shows different embodiments of a laminated packaging material by alternative variants of a slit.

### Detailed description

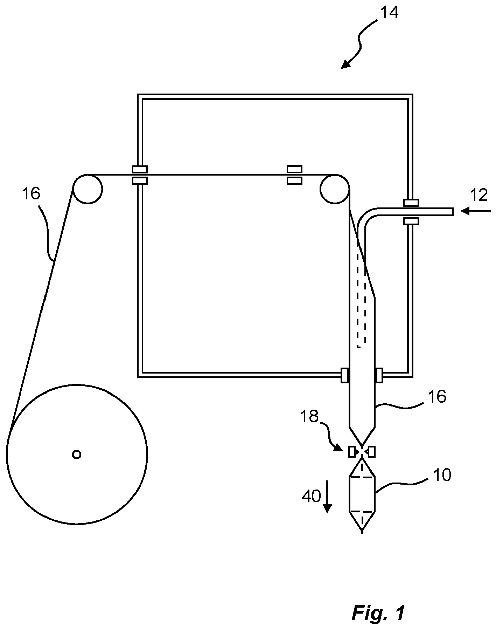

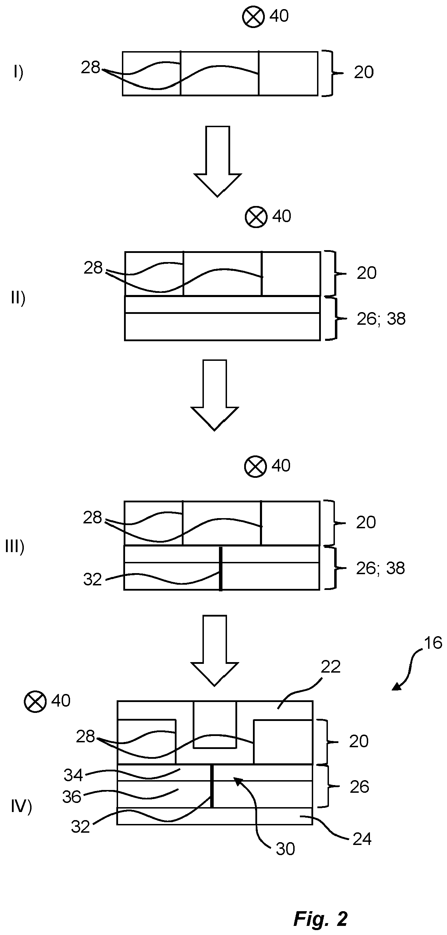

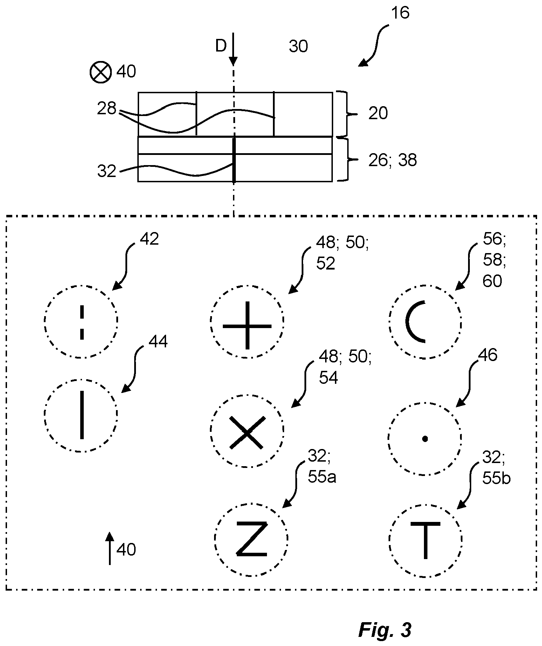

With reference to Fig. 1 an embodiment of an inventive packaging container 10 for a liquid food product 12 is illustrated. For example, a not further specified package producing machine 14 may deliver an inventive laminated packaging material 16 (see Figs. 2 and 3), from which the inventive packaging container 10 can be made. The inventive packaging container 10 can exemplarily be made by filling in the liquid food product 12 and then cutting off and sealing the inventive laminated packaging material 16 by a respective cutting and sealing means 18.

With reference to Fig. 2 an embodiment of an inventive laminated packaging material 16 for packaging of liquid food products 12 (shown in Fig. 1) is illustrated in a cross-sectional view. Said laminated packaging material 16 essentially comprises a bulk layer 20 of paper or paperboard or other cellulose-based material, a first outermost liquid tight layer 22, arranged on the outside of the bulk layer 20 to constitute the outside of a packaging container 10 (shown in Fig. 1) formed from the packaging material 16, a second innermost liquid tight layer 24 arranged on the inside of the bulk layer 20 to be in direct contact with the filled food product 12 (shown in Fig. 1), and an at least proportionately non-metal barrier film or sheet 26 being laminated between the bulk layer 20 and the second, innermost liquid tight layer 24, wherein the bulk layer 20 is provided with at least one through-going hole 28 and the first liquid tight layer 22, the second liquid tight layer 24, and the barrier film or sheet 26 are forming a laminated membrane 30 at the area of the through going hole 28.

According to the laminated packaging material 16 of the invention, the barrier film or sheet 26 of the membrane 30 is provided with at least one slit 32.

It shall be noted that the slit 32 may extend partially or fully through the barrier film or sheet 26 of the membrane 30, the latter being exemplarily shown in Fig. 2.

Further it shall be noted, that the at least proportionately non-metal barrier film or sheet 26 may completely comprise a non-metal material. In that case, it can be realized with a single layer made of a barrier material 34 not comprising any metal.

Alternatively, the slit or dot perforation may extend partly or fully through the substrate film or sheet layer, such that these layers are weakened, but not through the barrier coating or the skin layer, thus leaving a thin or coated barrier coating or barrier layer intact.

The first outermost liquid tight layer 22 and the second innermost liquid tight layer 24 are preferably but optionally heat sealable thermoplastic layers.

In some embodiments the exterior side of the membrane 30 may be provided with an additional barrier material, e.g. coated on the first outermost liquid tight layer 22, to further strengthen the oxygen barrier of the membrane 30 in the area weakened by the slit 32. Such barrier material could e.g. be PVOH or other type of suitable material. In systems where a decor layer is pre-printed on the bulk layer 20, and the outermost liquid tight layer 22 is also provided with the slit 32, the additional barrier material could be applied in the filling machine to cover the otherwise exposed slit 32.

As exemplarily shown in Fig. 2, the at least proportionately non-metal barrier film or sheet 26 may also be embodied as a composite material and therefore comprise more than one layer, respectively. In the example of Fig. 2, the barrier film or sheet 26 comprises a substrate layer 36 being coated with the barrier material 34. In this case, the barrier material 34 may comprise or consist of a metal material, as the substrate layer 36 is made of a non-metal material. However, an amount of non-metal material should be very high relative the amount of metal material.

Merely as a preferred example, the substrate layer 36 is made of a non-metal material comprising a plastic, paper or cellulose-based material. Merely as a further preferred example, the barrier material 34 comprises Aluminum. However, a thickness of the barrier material 34 preferably measures only 60 nm in this example, whereas a thickness of the substrate layer 36 preferably measures higher than 12 µm. Thus, in this example the amount of metal material does not exceed 1 vol% of the amount of non-metal material and is relatively very low for that reason.

As can be gained from Fig. 2, the slit 32 is centrally arranged at the membrane 30, which is particularly well manufacturable by laser cutting for example.

The inventive laminated packaging material 16 can be manufactured in an inventive method, as indicated in Fig. 2.

In a first step I of said method, the bulk layer 20 made of paper or paperboard or other cellulose-based material is provided with the at least one through-going hole 28.

In a second step II, the least proportionately non-metal barrier film or sheet 26 is laminated to said bulk layer 20 such that the barrier film or sheet 26 forms a membrane part 38 covering the at least one through-going hole 28 of the bulk layer 20.

In a third step III, the barrier film or sheet 26 of the membrane part 38 is provided with the at least one slit 32.

In a fourth step IV, the first outermost liquid tight layer 22 is laminated on the outside of the bulk layer 20 to constitute the outside of a packaging container 10 (shown in Fig. 1) formed from the packaging material 16, and the second innermost liquid tight layer 24 is laminated on the inside of the bulk layer 20 to be in direct contact with the filled food product 12 (shown in Fig. 1). This is done in a way that the first liquid tight layer 22, the second liquid tight layer 24, and the barrier film or sheet 26 together form the laminated membrane 30 at the area of the at least one through-going hole 28.

For step II, it is preferred to laminate the barrier film or sheet 26 to the bulk layer 20 by extrusion lamination or wet lamination.

Preferably, in step III the barrier film or sheet 26 of the membrane part 38 is provided with at least one slit 32 by laser cutting. Thus, the slit 32, which is one slit in Fig. 2 just as an example, can be precisely placed inside the through-going hole 28.

As can be seen in Fig. 2, the slit 32 is extending exemplarily fully through the barrier film or sheet 26.

Now making additional reference to Fig. 3, different embodiments of the laminated packaging material 16 will be described in further detail, with particular focus on preferred variants of the slit 32.

For this purpose, a machine direction 40 is defined and illustrated in Figs. 1, 2 and 3. The machine direction 40 refers to the fact that the laminated packaging material 16 is normally manufactured in a continuous process that has a material feed direction, which is the machine direction 40 in other words. Based on that, a longitudinal direction 40 of the laminated packaging material 16 is achieved, which is parallel the machine direction 40. As well known, parallel direction vectors can be shifted relative each other as long as they are still pointing in the same direction. Based on that, there will be no further difference made in the following description between the machine direction 40 and the longitudinal direction 40 and the same reference sign 40 is used to underline their equivalence.

The upper part of Fig. 3 shows the laminated packaging material 16, however without the first outermost liquid tight layer 22 and the second innermost liquid tight layer 24.

Different variants of the slit 32 are illustrated in the lower part of Fig. 3. The shown variants may be alternatives or used in any combination. The slits 32 are shown, according to detail D, in a view on the top of the through-going hole 28 in the upper part of Fig. 3, said view being projected to the lower part of Fig. 3.

In the alternative embodiments shown in detail D, the slit 32 has been manufactured, for example in step III of the inventive method, in a way that the at least one slit 32 extends in the longitudinal direction 40 and/or transversal direction of the laminated packaging material 16. The transversal direction is running perpendicular this longitudinal direction 40, accordingly.

In one embodiment, the slit 32 is formed by a perforation type of slit 42, preferably manufactured as straight lines. In another embodiment, the slit 32 is formed by a single straight line 44. As another example, the slit 32 may also be formed by a single perforation dot 46 or a type of slit 42 formed by such perforation dots 46 (not shown). With regard to the perforation dot 46, it shall be understood that this is not referring to a mathematical dot, but to a manufacturable dot 46 extending in the longitudinal direction 40 and the transversal direction, as well.

In another embodiment, the barrier film or sheet 26 of the membrane part 38 is provided with at least two intersecting slits 48. For example, said intersecting slits 48 may be in the form of a cross 50. For example, some of said slits 48 of the cross 50 may be angled relative the longitudinal extension 40 of the laminated packaging material 16, as shown in case of crosses 52 and 54. In case of the cross 52, only one slit 48 (shown horizontally) is angled relative the longitudinal extension 40. As further shown in case of cross 54, even all slits 48 of the cross 54 may be angled relative the longitudinal extension 40.

In other embodiments the slit 32 has a Z-shape 55a or a T-shape 55b.

Finally, in another embodiment there is a semi-circle type of slit 56 provided, which is a half-circle 58, merely as an example.

All geometries in the described examples, may be formed by making appropriate use of one or more straight lines 44, dots 46 or curved lines 60.

From the description above follows that, although various embodiments of the invention have been described and shown, the invention is not restricted thereto, but may also be embodied in other ways within the scope of the subject-matter defined in the following claims.

## Claims

1. A laminated packaging material (16) for packaging of liquid food products (12), comprising a bulk layer (20) of paper or paperboard or other cellulose-based material, a first outermost liquid tight layer (22), arranged on the outside of the bulk layer (20) to constitute the outside of a packaging container (10) formed from the packaging material (16), a second innermost liquid tight layer (24) arranged on the inside of the bulk layer (20) to be in direct contact with the filled food product (12), and a barrier film or sheet (26) being laminated between the bulk layer (20) and the second, innermost liquid tight layer (24), wherein the barrier film or sheet (26) is a non-metal barrier film or sheet, or a barrier film or sheet having a metal content of 5 mass percent or less, wherein the bulk layer (20) is provided with at least one through-going hole (28) and the first liquid tight layer (22), the second liquid tight layer (24), and the barrier film or sheet (26) are forming a laminated membrane (30) at the area of the through-going hole (28), **characterized in that** the barrier film or sheet (26) of the membrane (30) is provided with at least one slit (32).

2. The laminated packaging material (16) according to claim 1, wherein the at least one slit (32) extends fully through the barrier film or sheet (26).

3. The laminated packaging material (16) according to claim 1, wherein the second, innermost liquid tight layer (24) is covering the slit (32).

4. The laminated packaging material (16) according to claim 1, wherein the first outermost liquid tight layer (22), as well as the second, innermost liquid tight layer (24) are covering the slit (32)

5. The laminated packaging material (16) according to any of the preceding claims, wherein the barrier film or sheet (26) comprises a substrate layer (36) being coated with a barrier material (34).

6. The laminated packaging material (16) according to claim 5, wherein the substrate layer (36) is made of plastic or paper or a cellulose-based material.

7. The laminated packaging material (16) according to any of the preceding claims, wherein the slit (32) is centrally arranged at the membrane (30).

8. The laminated packaging material (16) according to any of the preceding claims, wherein the slit (32; 48) is in the form of a cross (50; 52; 54).

9. The laminated packaging material (16) according to any of claims 1 to 7, wherein the slit (32) is in the form of a semi-circle (56; 58).

10. The laminated packaging material (16) according to any of claims 1 to 7, wherein the slit (32) is in the form of at least one straight line (44) or a dot perforation (46).

11. The laminated packaging material (16) according to any of the preceding claims, wherein the barrier film or sheet (26) is a gas barrier film or sheet (26), preferably an oxygen barrier film or sheet (26).

12. A method of manufacturing a laminated packaging material (16) for packaging of liquid food products (12), comprising:
- providing a bulk layer (20) of paper or paperboard or other cellulose-based material with at least one through-going hole (28),
- laminating barrier film or sheet (26) to said bulk layer (20) such that the barrier film or sheet (26) forms a membrane part (38) covering the at least one through-going hole (28) of the bulk layer (20), said barrier film or sheet (26) is a non-metal barrier film or sheet, or a barrier film or sheet having a metal content of 5 mass percent or less,
- providing the barrier film or sheet (26) of the membrane part (38) with at least one slit (32), and
- laminating a first outermost liquid tight layer (22) on the outside of the bulk layer (20) to constitute the outside of a packaging container (10) formed from the packaging material (16), and
- laminating a second innermost liquid tight layer (24) on the inside of the barrier film or sheet (26) to be in direct contact with the filled food product (12), such that the first liquid tight layer (22), the second liquid tight layer (24), and the barrier film or sheet (26) together form a laminated membrane (30) at the area of the at least one through-going hole (28).

13. The method according to claim 12, wherein the step of laminating the barrier film or sheet (26) to the bulk layer (20) is performed by extrusion lamination or wet lamination.

14. The method according to claim 12 or 13, wherein the step of providing the barrier film or sheet (26) of the membrane part (38) with at least one slit (32) is performed by laser cutting, and/or by mechanical cutting.

15. The method according to any of claims 12 to 14, wherein the at least one slit (32) is extending fully or partly through the barrier film or sheet (26).

16. The method according to any of claims 12 to 15, wherein the at least one slit (32) extends in the longitudinal (40) and/or transversal direction of the laminated packaging material (16).

17. A packaging container (10) comprising the laminated packaging material (16) as defined in any of claims 1 to 11 and/or manufactured in a method according to any of claims 12 to 16.
